# EUROPEAN PATENT SPECIFICATION

(11) **EP 3 803 079 B1**
(45) Date of publication and mention of the grant of the patent: **30.04.2025**
(21) Application number: 19730888.5
(22) Date of filing: 30.05.2019
(51) Int. Cl.: F02B 75/00

(54) **DOUBLE ACTING PISTON ENGINES**
DOPPELTWIRKENDE KOLBENMOTOREN
MOTEURS À PISTON À DOUBLE ACTION

(30) Priority: 02.06.2018 GB 201809068
(43) Date of publication of application: 14.04.2021
(73) Proprietor: Dice Industries Ltd, Oxford, Oxfordshire OX2 8LT (GB)
(72) Inventor: DEEKE, Georg, Oxfordshire OX2 8LT (GB)
(74) Representative: Grey, Ian Michael
(86) International application number: PCT/GB2019/051475
(87) International publication number: WO 2019/229440

(56) References cited:
- WO-A1-02/50410
- DE-A1- 4 205 663
- US-A- 1 977 657
- US-A- 2 215 793
- US-A- 2 295 037
- US-A- 2 317 167
- US-A- 2 564 913
- US-A1- 2009 151 686

## Description

### Field

This invention relates to double acting internal combustion engines operating on a four stroke cycle.

### Background of the Invention

Double acting internal combustion engines are taught in WO0250410. This document describes a linear reciprocating piston engine having upper and lower combustion chambers either side of the piston. The lower chamber is sealed by a separation plate that is configured to accommodate the throw of the connecting rod as it moves about the crankshaft. Although such engines offer good power to weight, their reliable realisation is restricted by two major technical obstacles: The first of these is the difficulty in providing an effective seal of the lower combustion chamber; while the second is the problem of providing adequate lubrication of the piston.

WO 02/50410 discloses a four-stroke internal combustion engine having at least one cylinder having a double acting piston dividing the cylinder into two combustion chambers, and being reciprocal within the cylinder to perform a power stroke, producing work on a crankshaft whilst moving towards or away from the crankshaft. The piston has a pivotal connection with a connecting rod which is in turn connected directly to the crankshaft. A separation plate separates the engine pump from the adjacent combustion chamber and accommodates lateral movement of the connecting rod passing sealingly therethrough.

US 2,564,913 discloses a two-stroke cycle motor having a cylinder, a piston slidable in the cylinder, a crank case, a crank-shaft rotatable in the crank case and a connecting rod operatively connected between the crank-shaft and the piston. The connecting rod allows for reciprocating the piston upon rotation of the crank-shaft. The motor further comprises a sealing means for sealing the cylinder from the crank case, the sealing means comprising walls defining a guideway extending normal to the axis of said cylinder and disposed between the cylinder and the crank case, a slide member reciprocable in the guideway, a ball carried by and mounted for universal movement on the slide member, whereby the ball has a bore through which the connecting rod extends and is slidable, and compressible sealing means disposed between the relatively movable surface of the guideway, slide member, ball and connecting rod.

US 2009/151686 discloses an internal combustion engine which includes at least one piston that compresses air in the lower cylinder chamber as it transitions from top dead centre to bottom dead centre during the power stroke. The air in the lower cylinder chamber is compressed between the downward-moving cylinder and a structure that substantially seals the lower chamber from the crankcase chamber so that compression takes place in a chamber smaller than the crankcase chamber.

The present invention seeks to provide an improved double acting internal combustion engine by improving the sealing of a connecting rod passing through the separation plate of a double acting engine.

### Statements of Invention

According to the invention, there is provided a linear reciprocating piston engine comprising:
a cylinder;
a piston located within the cylinder, the piston separating upper and lower combustion chambers of the cylinder;
a separation plate disposed across a lower end of the cylinder to seal the lower combustion chamber;
a joint disposed in the separation plate, the joint comprising a bore through which a connecting rod extends to connect the piston to a crankshaft,
wherein movement of the piston along a longitudinal axis of the cylinder causes the connecting rod to rotate the crankshaft, said rotation of the crankshaft causing both transverse and angular movement of the connecting rod relative to the longitudinal axis of the cylinder, the angular movement of the connecting rod causing a corresponding angular movement of the joint; wherein the separation plate is configured to slide across the lower end of the cylinder to accommodate the transverse movement of the connecting rod; and wherein the joint comprises a curved outer surface configured to ensure contact with an outer seal disposed between the separation plate and the joint during angular movement of the joint and the connecting rod;
the joint further comprising at least two seals disposed between the bore and the connecting rod, the at least two inner seals being spaced along the bore of the joint;
wherein the outer and inner seals are selected from any of:
   a split ring compression seal;
   a split ring expansion seal;
   a gapless expansion seal;
   a gapless compression seal;
   a labyrinth seal having a castellated inner edge; and
   a brush seal.

The or each inner seal may be located in a respective groove in the bore of the joint.

The curved outer surface of the joint may be a spherical outer surface.

The lower end of the cylinder may be provided with a separation plate seal between the lower combustion chamber and the separation plate.

The engine may further comprise a bottom end component housing the crankshaft, the bottom end component being arranged to hold the separation plate against the lower end of the cylinder.

A seal may be disposed between the bottom end component and the separation plate.

### Brief Description of the Figures

Fig. 1 is a schematic drawing of a cylinder a double acting engine comprising a separation plate;
Fig. 2 is a partial view of an optional feature of the separation plate of the engine, as shown in detail in Fig. 2A;
Fig. 3 is a schematic drawing of a cylinder a double acting engine comprising a separation plate of an alternate design;
Fig. 4 is a detail view of a joint of the separation plate of the engine of Fig. 3;
Fig. 5 is a detail view of an optional sealing arrangement for the joint of Fig. 4;
Fig. 6 is a schematic drawing of a cylinder a double acting engine comprising a separation plate of an alternate design;
Fig. 7 is a detail view of an optional sealing arrangement for a separation plate;
Fig. 8 is a detail view of an optional sealing arrangement for a separation plate;
Fig. 9 is a schematic drawing of a cylinder a double acting engine of an alternative design;
Fig. 10 is a schematic view in the direction of arrow A of the engine of Fig. 8;
Fig. 11 is a schematic view of a piston lubricating system for a double acting engine of any of the designs of Figs. 1 to 10;
Fig. 12 is a schematic representation of the operational cycle of the cylinder shown in any one of Figs. 1 to 11; and
Fig. 13 is a schematic representation of an alternative operational cycle of the cylinder shown in any one of Figs. 1 to 11.

### Detailed Description of the Invention

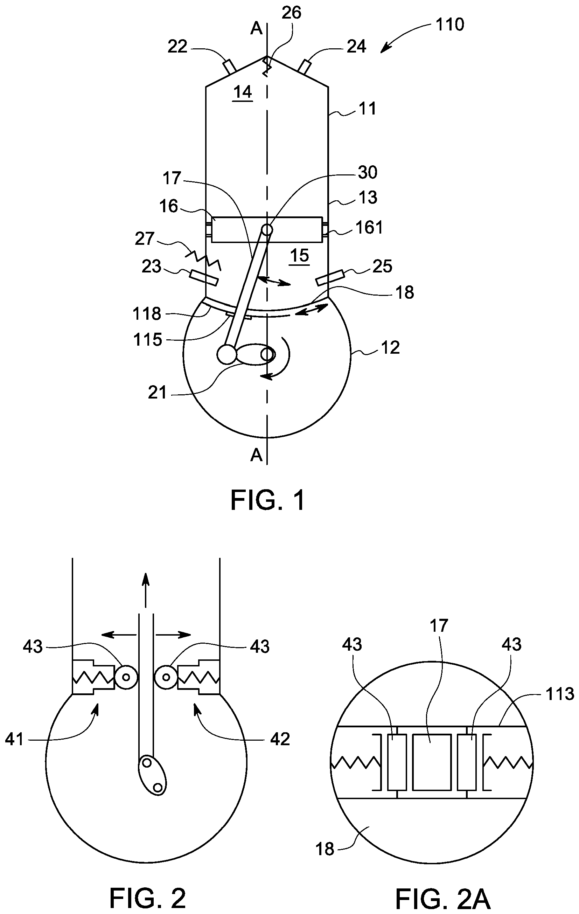

With reference to Fig. 1 there is shown an internal combustion engine 110 according to the present invention and which is a four stroke engine operable on all conventional fuels e. g petrol, alcohol, fuel oil, hyrocarbon gases, hydrogen etc..

The engine 110 comprises a cylinder block 11 mounted on a sump 12. For the sake of convenience only a single cylinder 13 is shown but the block 11 could house any number of cylinders as is desired for a particular engine configuration.

The cylinder 13 is divided into upper and lower combustion chambers 14 & 15 by a reciprocable piston 16. Piston rings 161 ensure a gas tight seal between the piston 16 and the cylinder wall 13.

The piston 16 is a double acting piston and is directly connected to a connecting rod 17 which sealingly passes through a separation plate 18 which separates the lower chamber 15 from the sump 12.

The term"double acting"means that a power stroke for the engine can be performed in either direction of movement of the piston 16.

The piston 16 is connected via a pin 30 to the connecting rod 17 which in turn is connected directly to the crank shaft 21 in the conventional manner. The separation plate 18 is configured to accommodate lateral movement of the connecting rod 17 as it moves around the crank shaft's axis. The term "lateral movement" means movement perpendicular to a longitudinal axis of the cylinder 13, A-A. The term "vertical movement" means movement in a direction parallel to the longitudinal axis A-A of the cylinder 13.

In the example of the engine 110 illustrated by Fig. 1, the separation plate 18 comprises an aperture 113 to accommodate lateral movement of the rod 17. The aperture is closed by a slide portion 118 with a sealed opening provided around the connecting rod. The slide portion 118 extends over the aperture 113 and slides across the separation plate 18 with the lateral motion of the crankshaft 21. The rod 17 will also move vertically in the slide portion 118 and is sealed therein by seals 115 to accommodate such movement.

A different sealing arrangement is shown in Fig. 2 and 2A in which a pair of spring loaded seals 41, 42 are located in the aperture 113 in separation plate 18. The connecting rod 17 may bear against the seals, or may contact bearing guides 43 mounted against the seals 41 & 42 respectively. The seals 41, 42 reciprocate in the aperture 113 to seal around the moving connecting rod.

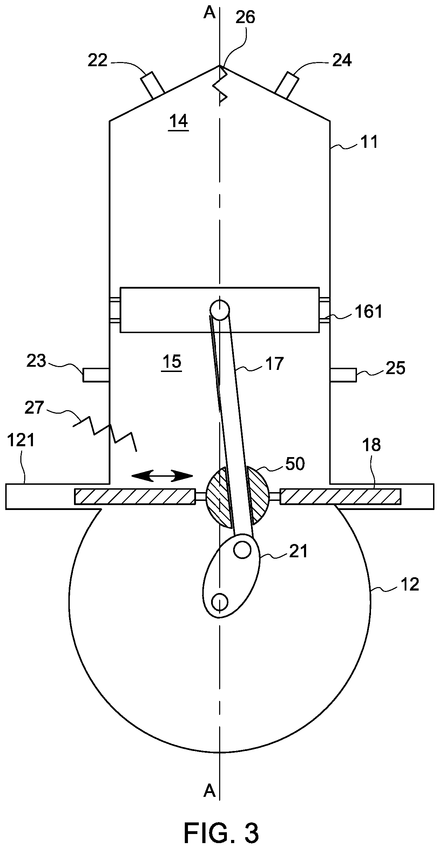

In another example of the engine illustrated by Fig. 3, the separation plate 18 is configured to move laterally. The separation plate 18 is located in a guide 121 disposed between the cylinder block 11 and the sump 12, or machined into one or the other. The length of the guide 121 transverse to the axis A-A of the cylinder 13 is greater than corresponding dimension of the separation plate 18 so that it is free to move laterally within the guide 121.

As the connecting rod 17 moves around the crank shaft's axis, the angle of inclination of the connecting rod 17 relative to the separation plate 18 changes. This changing angle is accommodated by a sealing joint 50. The sealing joint 50 is provided either directly in the separation plate 18 or in a slide portion 118, like that shown in Fig 1.

Alternatively, the separation plate 18 may be downwardly domed - like the separation plate of Fig. 1 - so that the connecting rod 17 remains perpendicular to a tangent of the domed separation plate throughout its movement of the crankshaft 21, thus negating the need for a joint. By "downwardly domed", it is meant that the separation plate 18 projects away from the cylinder 13 and into the sump 12.

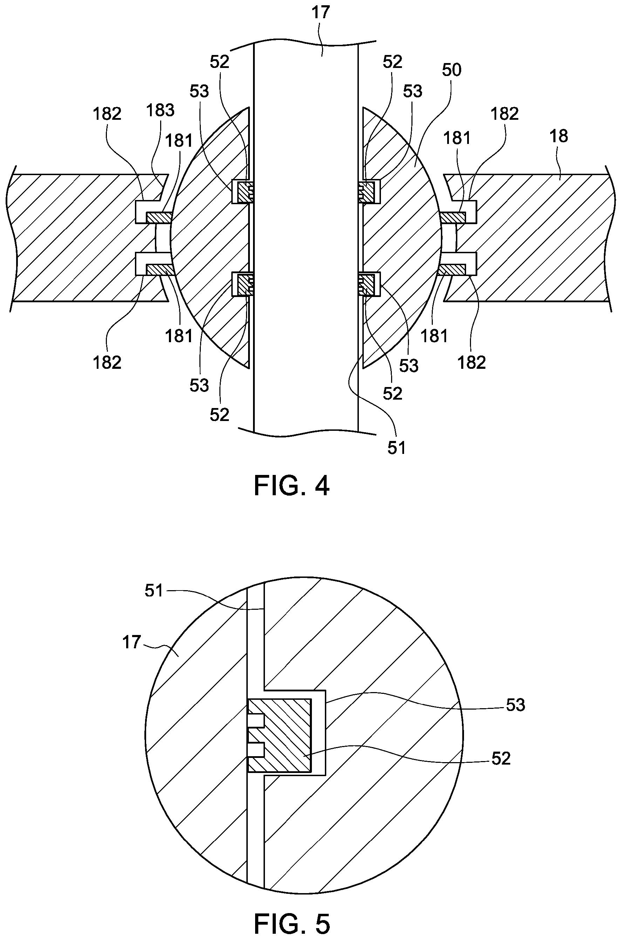

The joint 50 is located in an opening 183 of the separation plate or slide portion and comprises a bore 51 through which the connecting rod 17 extends and a curved outer surface to allow rotation of the joint 50 within the opening 183. Preferably the joint 50 comprises a spherical outer surface to accommodate slight rotation in other axes that might result from manufacturing tolerances. The joint 50 is retained by a curved inner edge of the separation plate 18 opening 183, which is shaped to prevent the joint 50 moving in a vertical direction, as illustrated in Fig. 4.

Referring still to Fig. 4, two seals are provided: An outer seal 181, disposed between the outer surface of the joint 50 and the separation plate, or slide portion; and an inner seal 52, disposed between the connecting rod 17 and the bore 51. Both seals 181, 52 have to accommodate movement of underlying surfaces. The inner seal 52 must accommodate the connecting rod 17 as it moves through the bore 51; while the outer seal 181 must accommodate rotation of the joint 50 and the associated relative movement of the outer surface and the separation plate 18 or sliding portion 118. Lubrication of the joint 50 may be effected by natural dispersion of oil during rotation of the crankshaft 21 as oil is picked up from the sump 12 and thrown against the separation plate 18, or, alternatively, oil may be sprayed from a nozzle (not shown) provided in the sump 12.

The inner and outer seals 52, 181 are split ring compression seals. In the illustrated example, the inner seal 52 comprises two split ring compression seals 52 spaced apart along the length of the bore 51, each being located in a corresponding groove 53 in the bore wall. The split nature of the seals allows them to decrease in diameter under compression to provide a seal about their inner edge against the connecting rod 17. During operation of the engine 110, when combustion occurs in the lower combustion chamber 15, combustion gasses expand into the bore 51 and grooves 53, compressing each seal 52 against the connecting rod 17 and simultaneously pushing each seal 52 onto a seat of the corresponding groove 53. This cuts off the bore 51 from fluid communication to prevent combustion gases from escaping into the sump 12. The provision of two split ring compression seals 52 ensures that the split parts of each seal 52 can be offset to further prevent the escape of gasses during combustion. However, it shall be appreciated that it is equally feasible to use gapless compression seals, in which case only a single compression seal 52 is required. Gapless compression seals may comprise a sleeve which extends over the split portion of the seal or be arranged so as to have overlapping free ends.

The outer seal 181 also comprises split ring compression seals 181, of which there are preferably two. Each seal 181 is located in a groove 182 provided about the inner edge of the opening 183. During operation of the engine 110, when combustion occurs in the lower combustion chamber 15, combustion gasses expand into the opening 183 and grooves 53, compressing each seal 181 against the outer surface of the joint 50 and simultaneously pushing each seal 181 onto a seat of the corresponding groove 182. This cuts off the opening 183 from fluid communication to prevent combustion gases from escaping into the sump 12. As with the inner seal 52, it is possible to use a gapless compression seal, in which case only a single split ring compression seal 183 is required.

In an alternative example, the outer and inner compression seals are replaced with outer and inner labyrinth seals. An example labyrinth seal is shown in Fig. 5, located in a groove 53 of the bore 51. Each labyrinth seal comprises a castellated inner edge, the castellations being arranged in the axial direction of the seal to make a tortuous path for escaping combustion gasses. In the illustrated example, a castellated inner edge of an inner seal 53 is shown in abutting relation with the connecting rod 17. Where a labyrinth seal is used for the outer seal 181, the castellated surface will be arranged in abutting relation with the outer surface of the joint 50.

In another alternative example, the outer and inner compression seals are replaced with outer and inner brush seals (not shown). Each brush seal comprises thousands of fine wires that extend from a supporting ring. The densely packed arrangement of these wires forms a barrier to escaping combustion gases whilst accommodating excursions, thermal movements of misalignments of the underlying surfaces that would otherwise reduce the efficiency of a labyrinth seal.

Compression seals, brush seals or labyrinth seals are ideally suited for dealing with the combustion forces experienced during operation of the engine. It is also possible to use split ring expansion seals where the seals are located in grooves of the other of the respective components: For example, the outer seal 181 is located in a groove in the outer surface of the joint and expands under the influence of combustion gases to seal against the inner edge of the opening 183.

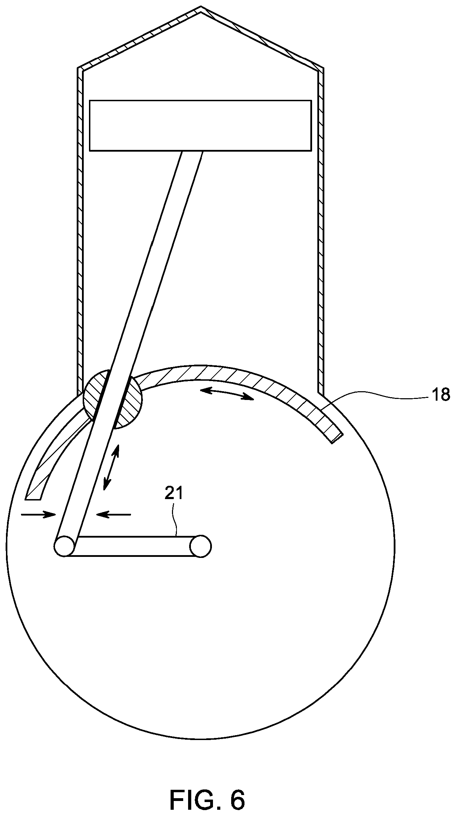

In another example of the engine, shown in Fig. 6, the separation plate is upwardly curved - for example upwardly domed - by which it is meant that the separation plate 18 partially projects into the cylinder 13. The upwardly domed shape of the plate redistributes the force to the edges of the plate and lowers the bending moment, thereby increasing longevity by decreasing the stress cycle intensity.

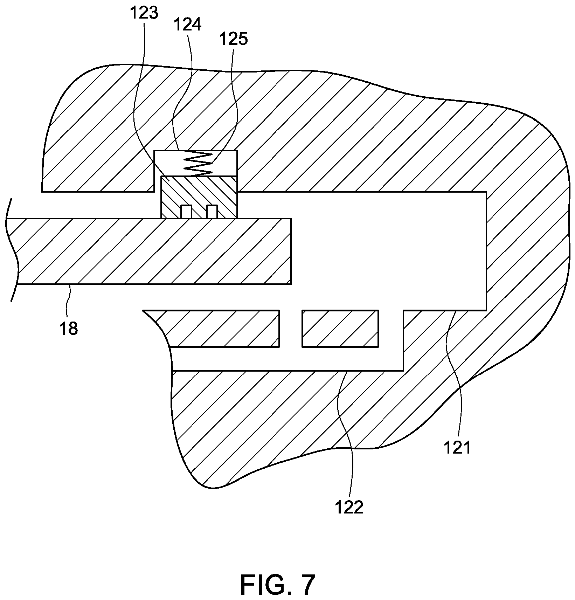

The separation plates 18 of the examples of Figs. 3 to 6 are supported in their guide 121 by a hydrostatic oil bed. Drilled oil galleries 122 that communicate with the guide 121 allow oil to well up into the space between the separation plate 18 and the guide walls, as shown in Fig. 7. Oil pressure is maintained by an oil pump (not shown) in the conventional manner. The hydrostatic oil bed provides lubrication and protects the separation plate 18 and guide walls from premature wear by separating the two components by a film of pressurised oil.

A seal 123 is provided between the separation plate and the guide 121 in which it is located to prevent combustion gasses escaping around the edges of the separation plate 18 and into the sump 12. The seal 123 provides the further advantage of restricting oil transfer from the guide 121 into the lower combustion chamber 15. As illustrated, a channel 124 in a wall of the guide 121 is provided to retain the seal 123. The channel 124 is located inward of edges of the separation plate 18 so that the seal 123 remains in contact with the separation plate 18 as it moves laterally with the throw of crankshaft 21. The illustrated seal 123 is a labyrinth seal having a castellated surface in contact with the separation plate 18 to create a tortuous path for combustion gasses; although it shall be appreciated that any conventional sealing method may be used, including a brush seal. Preferably the seal is located on an upper surface of the separation plate 18, by which it is meant that the surface facing the lower combustion chamber 15. A spring 125 may be provided to maintain the seal 123 in contact with the separation plate 18.

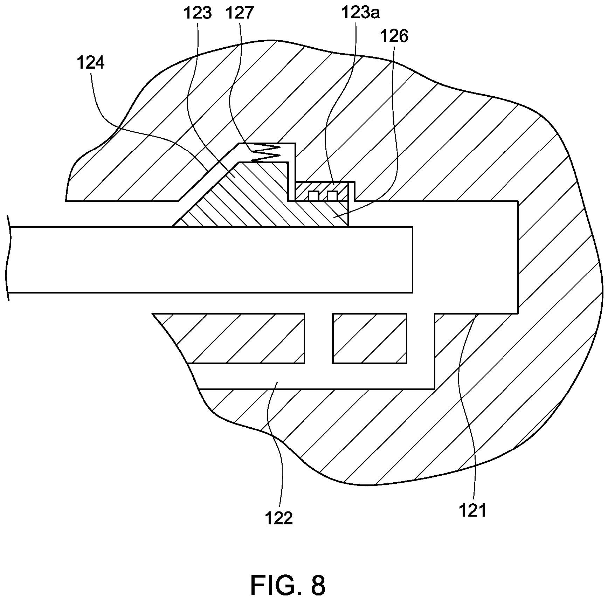

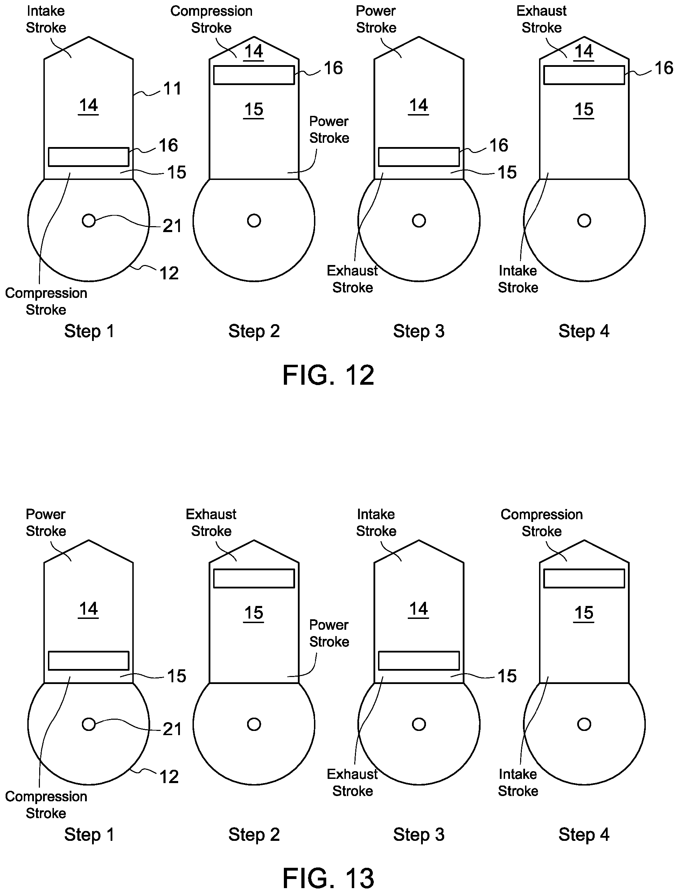

Alternatively, in another example illustrated in Fig. 8, the seal 123 has an inclined inner edge which directs combustion gas or compressed air into the channel 124 to force the seal 123 down and onto the separation plate 18, sealing the lower combustion chamber 15 during compression and combustion strokes. The seal 123 may also be configured to lift off of the separation plate 18 during exhaust and intake strokes to reduce friction. For example, an extension spring 127, as illustrated, or a magnet (not shown) may be provided to lift the seal 123 off of the separation plate 18, or, alternatively, the seal 123 may comprise an inclined outer edge (not shown) so that the seal 123 is lifted by the hydrodynamic effect of the film of oil. It is important the inclined outer edge is configured so that the hydrodynamic effect is easily overcome by the force of combustion gas or compressed air during compression and combustions strokes so that the combustion chamber 15 remains during this time. The intake, compression, combustion and exhaust strokes of the lower combustion chamber 15 are explained in more detail below, with reference to Figs. 12 and 13.

The illustrated seal of Fig. 8 also comprises a lip 126 which extends about its outer edge and provides a seat for an additional labyrinth seal 123a, although this is merely optional.

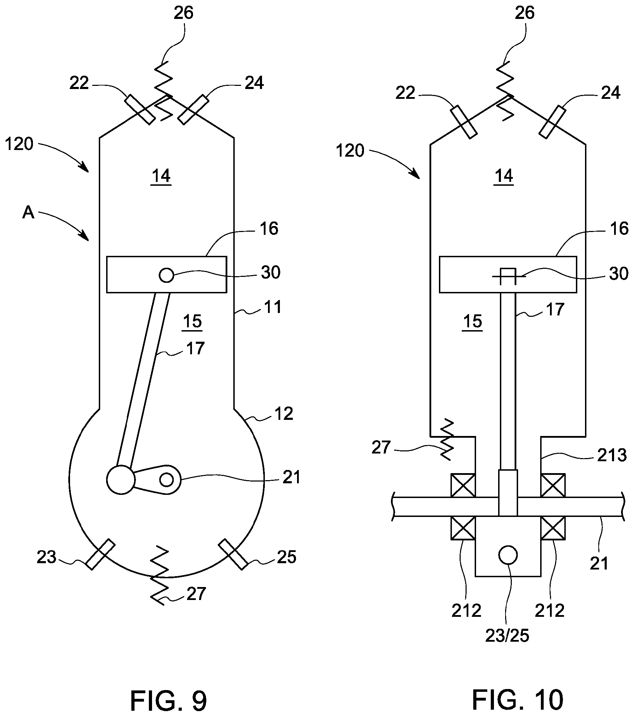

Yet another construction of engine 120 according to the present invention, is shown in Figs. 9 and 10. This engine is similar to the engine 110 excepting that the lower compression chamber 15 includes a portion of the sump 12 in which valves 23 & 25 and spark plug 27 are located in the wall thereof. Those components present in Fig 1 will be given the same reference numbers. Each lower chamber 15 extends only into a portion 213 of the sump with the chamber 15 sealed by bearings/seals 212 around the respective portion of the crankshaft 21. In a preferred condition, the total extended volume of the chamber 15 including the respective portion 213 of the sump equates with the effective working volume of chamber 14.

In conventional combustion engines, the cylinder wall and piston are lubricated by the natural dispersion of oil during rotation of the crankshaft, as oil is picked up from the sump and thrown into the cylinder. In more recent engines, oil is sprayed into the cylinder from a nozzle adjacent the connecting rod. In the presently described examples of the engine 110, the presence of a lower combustion chamber prevents such forms of lubrication.

Therefore, lubrication for the presently described engines 110 may include the use of self-lubricating fuels which may comprise added lubricants. Or, alternatively lubrication may be achieved by high pressure lubrication systems pumping lubricant along internal bores in the crankshaft 21 and connecting rods 17 and associated pins and bearings.

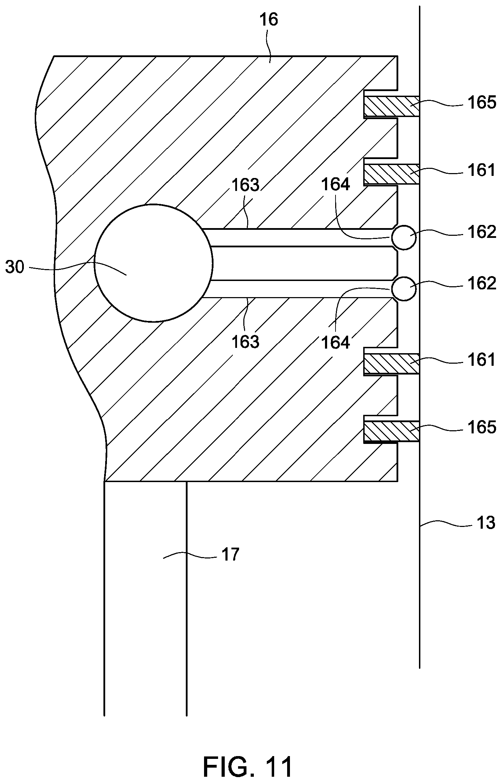

In one example, the lubrication system comprises an oil pump (not shown) which draws oil from the sump 12 and feeds it through a series of oil galleries that channel oil along the crankshaft 21 and up through an oil bore in the connecting rod 17. The oil bore opens onto the pin 30. Further oil galleries provided in the pin 30 transfer oil to piston galleries 163 (see Fig. 11) from where the oil may pass out of openings 164 in the piston cylindrical wall to provide a film of oil on the cylinder wall.

Careful management of this film of lubricant is necessary to prevent excessive oil combustion and to ensure sufficient lubrication of the piston rings 161. The proposed solution may use any combination of the oil distribution control techniques set out below:
Each of the openings 164 on the cylindrical wall of the piston may be provided with a valve 162 configured to regulate the oil film thickness on the cylinder wall. For example, the valve 162 may be configured so that when the hydostatic oil pressure of the film of oil between the cylindrical wall of the piston 16 and the cylinder 13 drops below the oil pressure in the piston galleries 163, the valve 162 opens and oil passes out, replenishing the oil film. In the illustrated example each valve 162 comprises a ball bearing located in a countersunk mouth of the opening 164.

Alternatively, valves are omitted and the oil film thickness is instead regulated simply by careful design of the diameter of each opening 164.

Each piston comprises an upper and lower piston ring 161 with the openings of the oil galleries 163 located between the piston rings 161. Further oil control rings 165 are provided to retain the oil film, as much as possible, between the piston rings 161. The oil control rings 165 are provided outwardly of the piston rings 161, that is to say nearer upper and lower surfaces of the piston 16. The oil control rings 165 scrape excess oil from the cylinder walls to prevent excessive oil remaining in the combustion chamber during combustion.

As a further measure to control the oil film the cylindrical wall of the piston is further provided with oil scavenging ports (not shown), through which excess oil can flow back into the galleries. The oil scavenging ports comprise one way valves, such as calibrated spring loaded stem valves, to ensure oil back into the oil galleries only when the hydrostatic oil pressure exceeds a predetermined value.

The engine may use sleeved cylinders having oil porous walls and oil drainage may be provided for the removal of excess oil.

The use of oil porous metals which are pre-impregnated with oil may be possible for short life engine for example but without limitation, racing engines which are stripped between races.

The oil may also acts as a coolant for the engine.

Using the Otto cycle as an example, the operational cycle of the two chambers 14 and 15 will now be explained. In such an example, each chamber 14, 15 is provided with respective inlet valves 22, 23, exhaust valves 24, 25 and spark plugs 26, 27.

The engine 110 in this example comprises a single piston 16 to produce a power stroke in both directions of movement of the piston (i. e towards and away from the crankshaft), which will hereinafter be called a double stroke cycle.

One operational cycle of the two chamber 14 & 15 will be explained with reference to Fig. 12:
Step 1: has the lower chamber 15 in the compression stroke with the upper chamber 14 in the induction stroke.
Step 2: has the lower chamber 15 in the power stroke and the upper chamber 14 in the compression stroke.
Step 3: has the lower chamber 15 in the exhaust stroke and the upper chamber 14 in the power stroke, and
Step 4: has the lower chamber 15 in the induction stroke and the upper chamber 14 in the exhaust stroke.

The cycle then begins again at step 1.

In essence at any stage in the cycle, the stroke in the lower chamber 15 is repeated in the upper chamber 14 during the next consecutive stroke.

An alternative operational cycle of the two chambers will be explained with reference to Fig 13:
Step 1 has the lower chamber 15 in the compression stroke with the upper chamber in the power stroke.
Step 2 has the lower chamber 15 in the power stroke with the upper chamber in the exhaust stroke.
Step 3 has the lower chamber in the exhaust stroke with the upper chamber 14 in the induction stroke.
Step 4 has the lower chamber 15 in the induction stroke with the upper chamber in the compression stroke.

The cycle then begins again at step 1. In essence at any stage in the cycle the stroke in the lower chamber 15 is one step behind the stroke in the upper chamber.

Any number of cylinders can be incorporated in an engine system, each cylinder using one of the operational cycles shown in Figs. 11 or 12, and in some engine systems some cylinders may operate on one cycle while other cylinders operate simultaneously on the other cycle. It shall also be appreciated that the engine can operate on other cycles.

## Claims

1. A linear reciprocating piston engine (110) comprising:
a cylinder (13);
a piston(16) located within the cylinder, the piston separating upper and lower combustion chambers (14, 15) of the cylinder;
a separation plate (18) disposed across a lower end of the cylinder to seal the lower combustion chamber; and
a joint (50) disposed in the separation plate, the joint comprising a bore (51) through which a connecting rod (17) extends to connect the piston to a crankshaft (21),
wherein movement of the piston along a longitudinal axis (A-A) of the cylinder causes the connecting rod to rotate the crankshaft, said rotation of the crankshaft causing both transverse and angular movement of the connecting rod relative to the longitudinal axis of the cylinder, the angular movement of the connecting rod causing a corresponding angular movement of the joint; wherein the separation plate is configured to slide across the lower end of the cylinder to accommodate said transverse movement of the connecting rod;
**characterised in that** the joint comprises a curved outer surface configured to ensure contact with an outer seal (181) disposed between the separation plate and the joint during said angular movement of the joint and the connecting rod;
the joint further comprising at least two inner seals (52) disposed between the bore and the connecting rod, the at least two inner seals being spaced along the bore of the joint;
wherein the outer and inner seals are selected from any of:
a split ring compression seal;
a split ring expansion seal;
a gapless expansion seal;
a gapless compression seal;
a labyrinth seal having a castellated inner edge; and
a brush seal.

2. An engine according to claim 1, wherein each inner seal is located in a respective groove (53) in the bore of the joint.

3. An engine according to any preceding claim, wherein the curved outer surface of the joint is a spherical outer surface.

4. An engine according to any preceding claim, wherein the lower end of the cylinder is provided with a separation plate seal (123) between the lower combustion chamber and the separation plate.

5. An engine according to any preceding claim, further comprising a bottom end component (12) housing the crankshaft, the bottom end component being arranged to hold the separation plate against the lower end of the cylinder.

6. An engine according to claim 5, wherein a seal is disposed between the bottom end component and the separation plate.

## Patentansprüche

1. Linearer Hubkolbenmotor (110), umfassend:
einen Zylinder (13);
einen Kolben (16), der sich innerhalb des Zylinders befindet, wobei der Kolben obere und untere Brennkammern (14, 15) des Zylinders trennt;
eine Trennplatte (18), die über einem unteren Ende des Zylinders vorgesehen ist, um die untere Brennkammer abzudichten; und
ein Gelenk (50), das in der Trennplatte vorgesehen ist, wobei das Gelenk eine Bohrung (51) umfasst, durch die sich eine Verbindungsstange (17) erstreckt, um den Kolben mit einer Kurbelwelle (21) zu verbinden,
wobei Bewegung des Kolbens entlang einer Längsachse (A-A) des Zylinders bewirkt, dass die Verbindungsstange die Kurbelwelle dreht, wobei die Drehung der Kurbelwelle sowohl Querals auch Winkelbewegung der Verbindungsstange relativ zu der Längsachse des Zylinders bewirkt, wobei die Winkelbewegung der Verbindungsstange eine entsprechende Winkelbewegung des Gelenks bewirkt; wobei die Trennplatte konfiguriert ist, um über das untere Ende des Zylinders zu gleiten, um die Querbewegung der Verbindungsstange aufzunehmen;
**dadurch gekennzeichnet, dass** das Gelenk eine gekrümmte Außenfläche umfasst, die konfiguriert ist, um Kontakt mit einer Außendichtung (181), die zwischen der Trennplatte und dem Gelenk vorgesehen ist, während der Winkelbewegung des Gelenks und der Verbindungsstange sicherzustellen;
wobei das Gelenk ferner zumindest zwei Innendichtungen (52) umfasst, die zwischen der Bohrung und der Verbindungsstange vorgesehen sind, wobei die zumindest zwei Innendichtungen entlang der Bohrung des Gelenks beabstandet sind;
wobei die Außen- und Innendichtungen aus einem beliebigen von Folgendem ausgewählt sind:
einer Spaltringkompressionsdichtung;
einer Spaltringexpansionsdichtung;
einer spaltlosen Expansionsdichtung;
einer spaltlosen Kompressionsdichtung;
einer Labyrinthdichtung mit einer gezahnten Innenkante; und
einer Bürstendichtung.

2. Motor nach Anspruch 1, wobei sich jede Innendichtung in einer jeweiligen Nut (53) in der Bohrung des Gelenks befindet.

3. Motor nach einem vorhergehenden Anspruch, wobei die gekrümmte Außenfläche des Gelenks eine kugelförmige Außenfläche ist.

4. Motor nach einem vorhergehenden Anspruch, wobei das untere Ende des Zylinders mit einer Trennplattendichtung (123) zwischen der unteren Brennkammer und der Trennplatte bereitgestellt ist.

5. Motor nach einem vorhergehenden Anspruch, ferner umfassend eine untere Endkomponente (12), welche die Kurbelwelle aufnimmt, wobei die untere Endkomponente angeordnet ist, um die Trennplatte gegen das untere Ende des Zylinders zu halten.

6. Motor nach Anspruch 5, wobei eine Dichtung zwischen der unteren Endkomponente und der Trennplatte vorgesehen ist.

## Revendications

1. Moteur à piston alternatif linéaire (110) comprenant :
un cylindre (13) ;
un piston (16) situé à l'intérieur du cylindre, le piston séparant les chambres de combustion supérieure et inférieure (14, 15) du cylindre ;
une plaque de séparation (18) disposée à travers une extrémité inférieure du cylindre pour étanchéifier la chambre de combustion inférieure ; et
un joint (50) disposé dans la plaque de séparation, le joint comprenant un alésage (51) à travers lequel une bielle (17) s'étend pour relier le piston à un vilebrequin (21),
dans lequel le mouvement du piston le long d'un axe longitudinal (A-A) du cylindre amène la bielle à faire tourner le vilebrequin, ladite rotation du vilebrequin provoquant à la fois un mouvement transversal et angulaire de la bielle par rapport à l'axe longitudinal du cylindre, le mouvement angulaire de la bielle provoquant un mouvement angulaire correspondant du joint ; dans lequel la plaque de séparation est conçue pour coulisser à travers l'extrémité inférieure du cylindre pour accueillir ledit mouvement transversal de la bielle ;
**caractérisé en ce que** le joint comprend une surface externe incurvée conçue pour assurer le contact avec un dispositif d'étanchéité externe (181) disposé entre la plaque de séparation et le joint pendant ledit mouvement angulaire du j oint et de la bielle ;
le joint comprenant en outre au moins deux dispositifs d'étanchéité internes (52) disposés entre l'alésage et la bielle, les au moins deux dispositifs d'étanchéité internes étant espacés le long de l'alésage du joint ;
dans lequel les dispositifs d'étanchéité externe et interne sont choisis parmi l'un quelconque de :
un dispositif d'étanchéité de compression à bague fendue ;
un dispositif d'étanchéité d'expansion à bague fendue ;
un dispositif d'étanchéité d'expansion sans jeu ;
un dispositif d'étanchéité de compression sans jeu ;
un dispositif d'étanchéité à labyrinthe ayant un bord interne crénelé ; et
un dispositif d'étanchéité à brosse.

2. Moteur selon la revendication 1, dans lequel chaque dispositif d'étanchéité interne est situé dans une rainure respective (53) dans l'alésage du joint.

3. Moteur selon l'une quelconque des revendications précédentes, dans lequel la surface externe incurvée du joint est une surface externe sphérique.

4. Moteur selon l'une quelconque des revendications précédentes, dans lequel l'extrémité inférieure du cylindre est pourvue d'un dispositif d'étanchéité de plaque de séparation (123) entre la chambre de combustion inférieure et la plaque de séparation.

5. Moteur selon l'une quelconque des revendications précédentes, comprenant en outre un composant d'extrémité inférieure (12) logeant le vilebrequin, le composant d'extrémité inférieure étant agencé pour maintenir la plaque de séparation contre l'extrémité inférieure du cylindre.

6. Moteur selon la revendication 5, dans lequel un dispositif d'étanchéité est disposé entre le composant d'extrémité inférieur et la plaque de séparation.
